# EUROPEAN PATENT SPECIFICATION

(11) **EP 2 621 836 B1**
(45) Date of publication and mention of the grant of the patent: **12.11.2014**
(21) Application number: 11758573.7
(22) Date of filing: 02.09.2011
(51) Int. Cl.: B65G 17/36, B65G 47/57, A01K 31/16

(54) **DEVICE FOR TRANSPORTING EGGS AND METHODS FOR INSTALLING AND USING THE DEVICE**
VORRICHTUNG FÜR DEN TRANSPORT VON EIERN SOWIE VERFAHREN ZUR INSTALLATION UND VERWENDUNG DER VORRICHTUNG
DISPOSITIF PERMETTANT DE TRANSPORTER DES UFS ET PROCÉDÉS D'INSTALLATION ET D'UTILISATION DUDIT DISPOSITIF

(30) Priority: 29.09.2010 NL 2005420
(43) Date of publication of application: 07.08.2013
(73) Proprietor: A.H. Jansen Holding B.V., 3772 MC Barneveld (NL)
(72) Inventor: JANSEN, Albrecht Hendrik, NL-3772 MC Barneveld (NL)
(74) Representative: Eveleens Maarse, Pieter
(86) International application number: PCT/NL2011/050606
(87) International publication number: WO 2012/044156

(56) References cited:
- EP-A1- 0 282 592
- WO-A1-87/00398
- DE-U1-202006 003 445
- GB-A- 1 330 820
- NL-A- 6 411 305
- US-A- 4 199 051
- US-B1- 6 343 688

## Description

The invention relates to a device for transporting eggs. The invention also relates to a method for installing such a device. The invention further relates to a method for transporting eggs at least in vertical direction.

Eggs are usually laid in houses of considerable size by a large number of poultry, such as chickens, which are kept in coops. These eggs are subsequently guided from the coops to a feed channel for eggs. From the feed channel the eggs are then further processed, such as cleaned, sorted by size and/or weight and packaged in boxes.

It is already known to displace the eggs from the feed channel to another location, for instance because processing of eggs is easier at this other location. Both NL-6 411 305 A and DE-20 2006 003 445 U disclose a device for transporting eggs, comprising a frame, at least one first receiving station connected at a first height to the frame for eggs supplied via a feed channel, a dispensing station for the eggs connected at a second height to the frame, and a conveyor carried by the frame and extending along the at least one receiving station and the dispensing station for the purpose of transporting the eggs from the at least one receiving station to the dispensing station, wherein the first receiving station can be connected at different heights to the frame, wherein the conveyor is an endless conveyor which is provided with two endless chains between which a number of egg holders are arranged, and wherein the chains are each guided along guide wheels bearing-mounted in the frame and in the stations.

To allow for a smooth transition of the eggs from the feed channel to the conveyor, the present invention provides a device of the kind referred to above, wherein the egg holders are each connected on both sides to the chains for pivoting about an axis extending in substantially horizontal direction above the centre of gravity of the egg holders, wherein the path of the conveyor connecting to each of the receiving stations comprises a horizontal component, the path of the conveyor leading to each of the receiving stations comprises a vertical component, wherein during the transition from the vertical to the horizontal movement, the eggs are thereby displaced on the egg holders, and wherein the distance between the egg holders is chosen such that a first egg holder blocks an egg carried to the receiving station until an egg holder following the first egg holder has moved a predetermined distance toward the receiving station.

EP-0 282 592 A discloses an egg conveyor, also comprising egg carriers pivotably connected to chains. However the cooperation of the egg carriers and the stations is different as both comprise interleaved teeth.

In a practical embodiment the device comprises at least a second receiving station which can be connected at different heights to the frame, wherein the conveyor extends along at least the second receiving station and the dispensing station and wherein the conveyor is adapted to transport the eggs from at least the first and the second receiving station to the dispensing station. Eggs supplied via at least two feed channels can hereby be singulated in simple manner to a dispensing station. Because only a single dispensing station is present, the flows of eggs can be concentrated into a single flow. This improves the logistical process of further processing of the eggs.

In another embodiment the chains are each guided over a toothed wheel which can be driven by an electric motor for the purpose of driving the chains in a direction in which the path leading to a receiving station is travelled in upward direction. The eggs are hereby moved upward from the receiving stations, this simplifying the construction of the receiving stations.

The egg holders can also be embodied in diverse ways. The egg holders can thus comprise a housing which is provided with a feed and discharge opening and which encloses a receiving space. In another embodiment the egg holders each comprise two mutually connected supports which extend horizontally parallel to each other and which are adapted to support at least two eggs. Such egg holders have a large capacity for holding eggs, with a reduced risk of breakage of the eggs. The egg holders can be manufactured from diverse materials. It is however advantageous for at least the supports to be manufactured from an elastic material such as a plastic, this further reducing the risk of the eggs breaking. The supports can also have by design a certain degree of resilience. It must however be ensured that the supports are sufficiently strong to support the eggs.

For a constant feed of eggs to the dispensing station the egg holders are connected to the chains at equal distances from each other.

It is not possible to preclude eggs without shell or broken eggs being supplied from the feed path from time to time. So as to prevent such leaking eggs causing too much soiling, the path of the conveyor connecting to each of the receiving stations comprises a component in the horizontal direction. The egg contents leaking from the eggs then soil the underlying eggs less or not at all, while the egg contents dripping from the eggs travelling the horizontal path can be collected in a tray placed underneath the horizontal part.

The risk of breakage is reduced further when at the position of the at least one receiving station a guide element is placed which is adapted to tilt the egg holder or rotate it about its axis at the position of the receiving station by engaging on the egg holder. Because the egg holder is rotated at the position of the at least one receiving station a supplied egg can be placed more easily in the egg holder, since a part of the egg holder is moved upward by rotation and further rolling of the eggs for loading is prevented.

The receiving station is preferably provided with a flexible carrier extending over the width of the egg holders and substantially horizontally into the path of eggs placed on an egg holder and passing through the receiving station, which carrier is adapted to connect to the feed channel and the flexibility of which is such that it can carry eggs but can allow passage of eggs placed on an egg holder and passing through the receiving station. It is hereby possible at the second or subsequent station to move the carriers already provided with eggs in a station located upstream to a position past the second or subsequent station without this carrier necessary for feed of the eggs for loading disrupting the movement of these eggs.

An inexpensive embodiment of the carrier which is easy to replace results when the carrier comprises a brush, the bristles of which extend with a component in the direction of movement of the eggs. This is found to reduce still further the risk of the eggs breaking because bristles of the brush deform downward under the weight of an egg and thereby reduce the distance between the carrier and the egg holders, while soiling is further brushed off the eggs.

As already elucidated, the flexibility of the device increases if the dispensing station can be connected at different heights to the frame. A user can hereby adjust the height of the dispensing station as desired. The conveyor is preferably endless so that the path of the conveyor adjusts to the height of the dispensing station without the length of the path changing subject to the height of the dispensing station.

For controlled dispensing of eggs there is placed at the position of the dispensing station a guide element which is adapted to tilt the egg holder about its axis at the position of the dispensing station by engaging the egg holder. In an advantageous embodiment the dispensing station is provided here with at least one urging element which is adapted to protrude between the supports of the egg holders when the egg holders have been tilted and to urge the eggs carried on the egg holders out of the tilted egg holders.

In a simple construction the guide elements each comprise a plate which is bent along a contour and connected to the frame and which is adapted to engage on a trailing part of the egg holders. It is noted that only a single plate forming a guide element can be arranged, but that two or more such plates can also be provided. They can be arranged directly against the side walls of the frame, although they can likewise be placed at a distance from the side walls.

The invention also provides a method according to claim 11 for installing a device for transporting eggs, comprising the following steps of: placing a frame, connecting a receiving station to the frame at a height such that a feed channel for feeding eggs to the device connects to the receiving station, connecting a dispensing station to the frame at a height such that the dispensing station connects to a discharge channel for discharging eggs from the device, and placing a conveyor supported by the frame and extending along the at least one receiving station and the dispensing station for the purpose of transporting the eggs from the at least one receiving station to the dispensing station. For the advantages of the method according to the invention reference is made to the advantages of the device according to the invention as described above.

Preferably the method comprises of connecting a second receiving station to the frame at a height such that a second feed channel for feeding eggs to the device connects to the receiving station; and guiding the conveyor along the second receiving station. Eggs supplied via at least two feed channels can hereby be singulated in simple manner to a dispensing station.

The invention further provides a method according to claim 12 for transporting eggs at least in the height, comprising the steps of feeding the eggs at a first height to an endless conveyor, comprising a number of egg holders pivoting about an axis extending in substantially horizontal direction above the centre of gravity of the egg holders, at a first receiving station, and transporting the eggs via the endless conveyor to a discharge member at a dispensing station at a second height of the endless conveyor, wherein the direction of movement of the conveyor is changed from a movement with a vertical component to a movement with a horizontal movement in the receiving station, wherein during the transition from the vertical to the horizontal movement, the eggs are thereby displaced on the egg holders, and wherein a first egg holder blocks an egg carried to the receiving station until an egg holder following the first egg holder has moved a predetermined distance toward the receiving station. For the advantages of the method according to the invention reference is made to the advantages of the device according to the invention as described above.

In an embodiment of the method eggs are fed at a third height to the endless conveyor at a second receiving station. Eggs supplied via at least two feed channels can hereby be singulated in simple manner to a dispensing station.

The invention will be elucidated on the basis of non-limitative exemplary embodiments shown in the following figures. Herein:
figure 1 shows a perspective view of a device for transporting eggs according to the invention;
figure 2a shows a side view of a detail of a receiving station of the device according to figure 1;
figure 2b shows a side view corresponding to figure 2a in another position of the transporting member;
figure 2c shows a side view corresponding to figures 2a and 2b in yet another position of the transporting member;
figure 3a shows a side view of a detail of a dispensing station of the device according to figure 1;
figure 3b shows a side view corresponding to figure 3a in another position of the transporting member;
figure 3c shows a side view corresponding to figures 3a and 3b in yet another position of the transporting member;
figure 3d shows a side view corresponding to figures 3a, 3b and 3c in a fourth position of the transporting member; and
figure 4 shows a perspective view of an egg holder of the device according to figure 1.

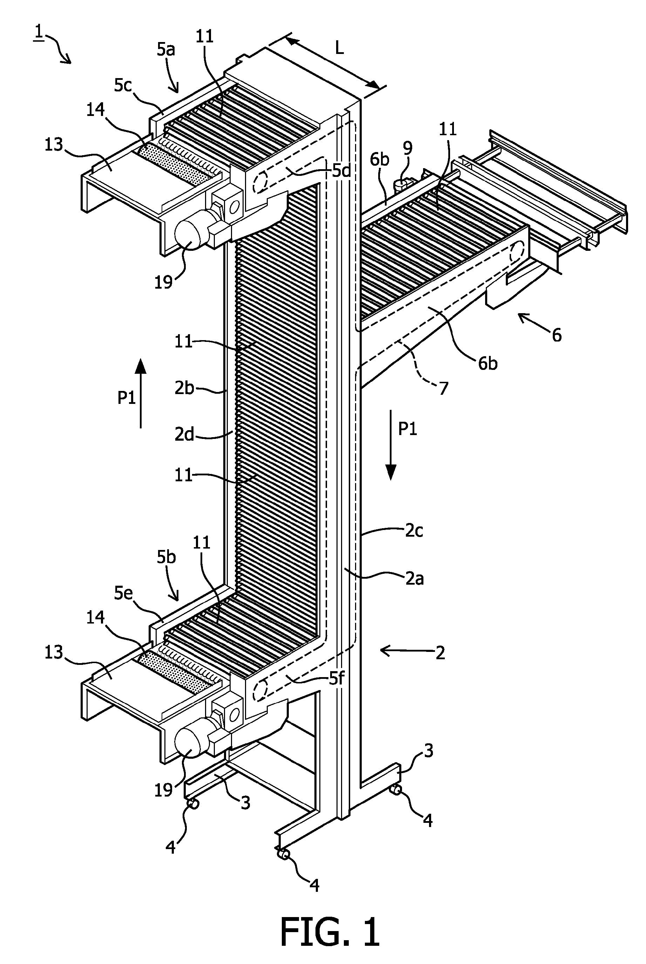

A device for transporting eggs, designated as a whole with 1, is shown with reference to figure 1. Device 1 comprises a frame 2 extending substantially in vertical direction. On the underside of frame 2 two elongate support elements 3 extending in horizontal direction are connected to frame 2. Wheels 4 provided with a brake are placed at both ends of support elements 3 for displaceably supporting frame 2. Frame 2 further comprises two wall parts 2a and 2b situated at a mutual distance L on either side of frame 2.

On a first side of frame 2 two receiving stations 5a, 5b for eggs supplied via a feed channel are connected one above the other to frame 2. On the opposite side of frame 2 a dispensing station 6 for eggs is connected to frame 2. The two receiving stations 5a and 5b each comprise side walls 5c, 5d and 5e, 5f respectively and dispensing station 6 comprises side walls 6a, 6b, wherein the distance between the opposite side walls 5c and 5d of receiving station 5a, 5e and 5f of receiving station 5b and 6a and 6b of dispensing station 6 is smaller than the distance L between wall parts 2a and 2b of frame 2. Receiving stations 5a and 5b and dispensing station 6 can hereby be placed at least partially between wall parts 2a and 2b of frame 2.

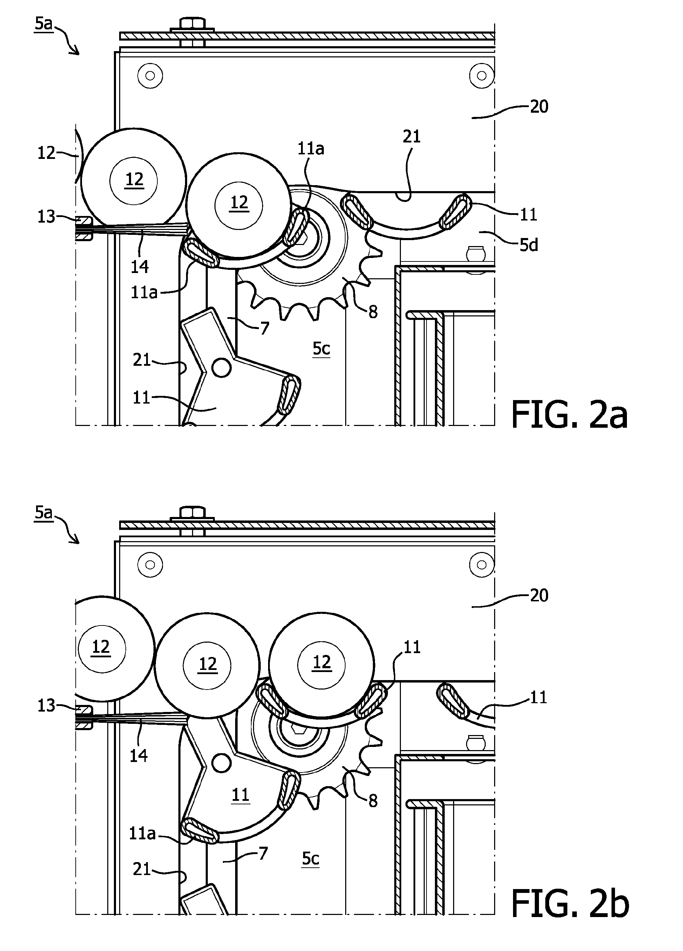

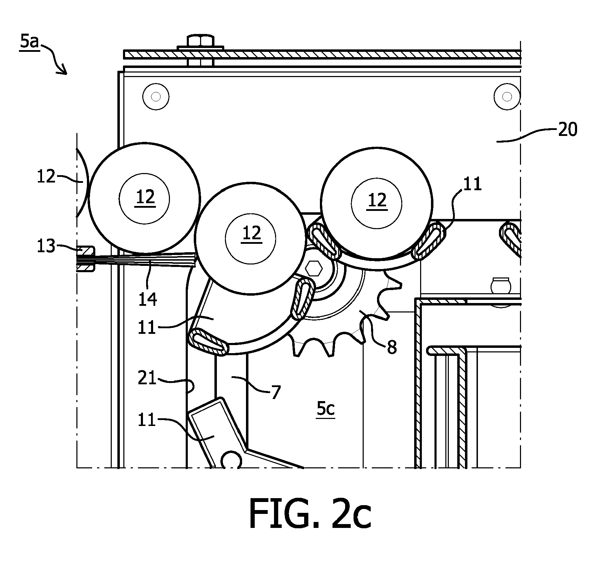

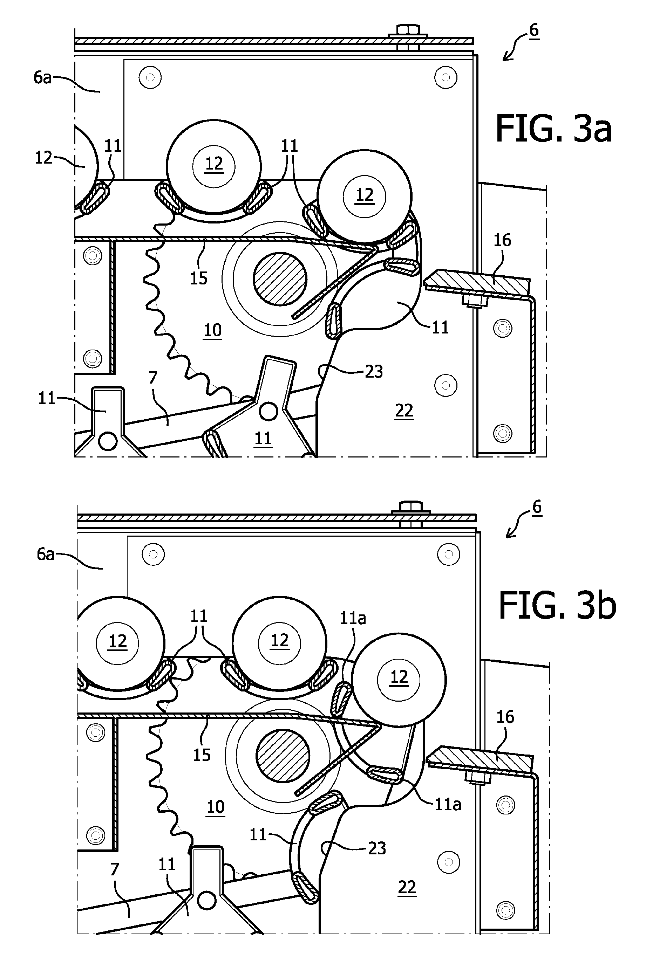

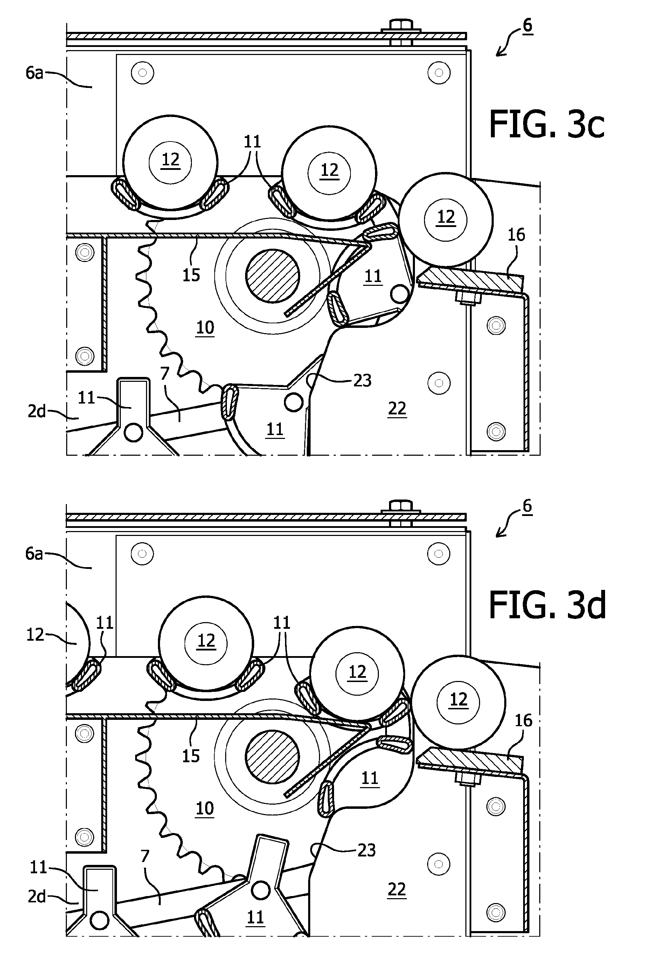

Device 1 also comprises an endless conveyor carried by frame 2 and extending along receiving stations 5a and 5b and dispensing station 6. As also shown in figures 2a, 2b, 2c and 3a, 3b, 3c and 3d, the conveyor is formed by two endless chains 7 which are located a distance from each other, only one of which is visible in the embodiment shown here, and which are each guided along guide wheels 8 bearing-mounted in frame 2, receiving stations 5a, 5b and dispensing station 6. Chains 7 are each guided over a toothed wheel 10 which can be driven by an electric motor 9 connected to dispensing station 6 for the purpose of driving chains 7 in the direction of arrows P1. Arranged between the two chains 7 are a plurality of egg holders 11 which are each connected on both sides to chains 7 for pivoting about an axis extending in substantially horizontal direction above the centre of gravity of egg holders 11.

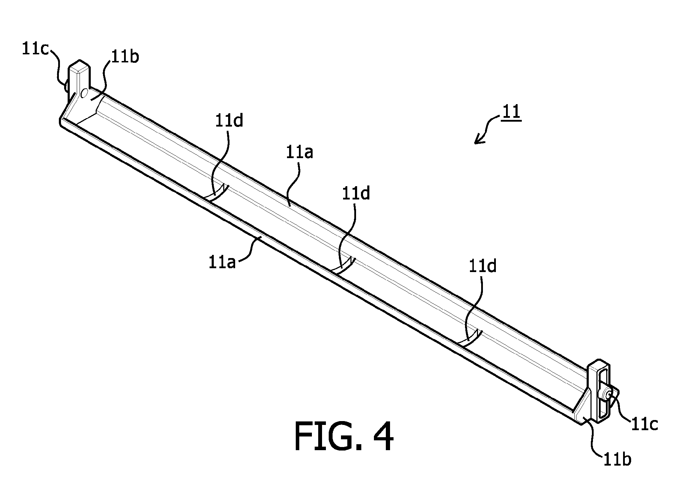

The upstream path of chains 7 leading to each of the receiving stations 5a, 5b comprises a vertical component, wherein the mutual distance between egg holders 11 is chosen such that a first egg holder 11 blocks an egg which has been supplied to a receiving station 5a, 5b until a subsequent, underlying egg holder 11 has reached a position a predetermined distance from receiving station 5, as shown in figure 2. The downstream path of the conveyor connecting to each of the two receiving stations 5a, 5b comprises a component in the horizontal direction. Eggs can hereby be received in holders 11 and taken from holders 11 in simple manner. For a more detailed view of egg holders 11 reference is made to figure 4.

A feed channel (not shown in the drawing) leads to each of the receiving stations 5a, 5b. The feed channels can be driven by electric motors 19 connected to receiving stations 5a, 5b, which electric motors 19 comprise for this purpose a suitable force-transmitting element such as a toothed wheel. The two receiving stations 5a, 5b are each provided with a carrier 13 extending over the width of egg holders 11 and substantially horizontally into the path of eggs 12 placed on an egg holder 11 and passing through the two receiving stations 5. Carrier 13 comprises a brush 14, the bristles 14a of which extend with a component in the direction of movement of eggs 12. Owing to the flexibility of brush 14 eggs can be carried by carrier 13, while eggs 12 placed in an egg holder 11 and passing through receiving station 5 can pass over carrier 13 as shown in figure 2a.

The two receiving stations 5a, 5b further comprise at least one contour plate 20 provided with a contour 21. These contour plates 20, which are arranged a short distance from the inner side of one of the or of both side walls 5c, 5d and 5e, 5f of receiving stations 5a and 5b respectively, serve to tilt the passing egg holders 11 by means of sliding contact between egg holders 11 and contour 21 of contour plates 20, as also shown in figures 2a, 2b and 2c.

Dispensing station 6 is also provided with a contour plate 22 provided with a contour 23. Contour 23 here also serves to tilt egg holders 11 by sliding contact between contour 23 and egg holders 11, in this case for the purpose of tilting such that eggs 12 leave egg holders 11. As in the case of receiving stations 5a, 5b, contour plate 22 is adapted to engage on rod-like supports 11a forming part of egg holders 11.

Dispensing station 6 is provided with a bent plate 15. This plate 15 extends substantially horizontally, wherein the bent part extends obliquely downward as shown in the figures 3. Bent plate 15 is provided with incisions to provide space for connecting elements 11b of egg holders 11. Bent plate 15 is after all placed such that it extends to a position between supports 11a of egg holders 11.

Figure 4 shows an egg holder 11. Egg holders 11 each comprise two mutually connected rod-like supports 11a extending horizontally parallel to each other. Supports 11a are mutually connected by connecting elements 11b on either side and at intermediate positions. Further arranged on the ends of supports 11b are substantially circle segment-shaped coupling elements 11c which are both provided with a shaft end 11d, each to be connected to chains 7 for rotation about a horizontal axis. A protrusion 11e is attached to both coupling elements. Egg holder 11 is integrally formed from plastic, for instance by injection moulding.

Installation of the device takes place as follows. Frame 2 is placed in connection with feed channels for eggs at a desired location. The desired height of the two receiving stations 5a, 5b is then determined, for instance by determining the height of the feed channels debouching in the space. The two receiving stations 5a, 5b are then held at the desired height between wall parts 2a, 2b of frame 2. By now drilling one or more holes through wall parts 2a and 2b of frame 2 and through walls 5c, 5d and 5e, 5f of the respective receiving stations 5a and 5b and subsequently arranging a bolt connection through the drilled openings, wall parts 2a, 2b of frame 2 and walls 5c, 5d and 5e, 5f of the two respective receiving stations 5a and 5b are mutually connected. Dispensing station 6 is connected to frame 2 in similar manner. Once the two receiving stations 5a, 5b and dispensing station 6 have been connected to frame 2, endless chains 7 are placed round guide wheels 8.

Figure 2 now elucidates how eggs 12 are placed into egg holders 11 from a discharge channel.

Device 1 is placed close to a feed channel for eggs. The feed channel carries eggs 12 onto carrier 13. Eggs 12 are displaced toward egg holders 11 as shown in figure 2a. Eggs 12 are then carried over a brush 14 functioning as carrier. Egg holders 11 are guided in a continuous movement along the free end of brush 14. The contours 21 of contour plates 20 engage on the rod-like egg supports 11a of egg holders 11. The egg holder is hereby tilted. Contour plates 20 are formed such that the egg support 11a of egg holder 11 remote from brush 14 is displaced upward. Eggs 12 supplied from the feed channel here urge an egg 12 lying on brush 14 into the tilted egg holder 11. Because the egg support 11a of egg holder 11 remote from brush 14 has been moved upward, the risk of an egg 12 moving beyond this upward rotated support 11a and falling off egg holder 11 is small. The egg holder 11 in which an egg 12 is placed is then displaced upward and sideways by chains 7. This egg holder 11 here blocks eggs lying on brush 14, thereby preventing eggs 12 lying on brush 14 falling too deeply into the underlying egg holder, whereby the eggs could break. Only after the egg holder 11 in which an egg 12 is placed has been moved sufficiently sideways can subsequent eggs fall into the underlying egg holder, as shown in figure 2c. Eggs 12 then fall through only a small height into egg holder 11 because this egg holder has been moved upward. The above described process is repeated for subsequent eggs 12.

The dispensing of eggs 12 from egg holders 11 taking place in dispensing station 6 is shown in figure 3. Egg holders 11 in which eggs 12 have been placed are moved toward dispensing station 6 by the continuously driven chains 7, as shown in figure 3a. As in the case of receiving stations 5a, 5b, egg holders 11 are guided along contour plate 22 by chains 7. Egg holders 11 are hereby tilted so that the eggs 12 present in egg holders 11 leave the egg holders easily, as shown in figure 3a. Separation of the eggs from the egg holders is facilitated by the presence of the above described bent plate 15. When the egg holder is in the position shown in figure 3b, plate 15 extends here between supports 11a into the space in which the eggs are situated. Eggs 12 are hereby moved from egg holder 11 onto collecting element 16. The distance travelled by eggs 12 without support between plate 15 and collecting element 16 is small, so there is little risk of breakage. By transporting the emptied egg holder 11 further along plate 15, the emptied egg holder 11 will tilt further and make space for the subsequent egg holder 11 which has yet to be emptied, as shown in figure 3c. The process is then repeated for subsequent egg holders 11, this being shown in figure 3d.

It will be apparent that the invention is not limited to the exemplary embodiments shown and described here, but that within the scope of the appended claims numerous variants are possible which will be self-evident to the skilled person in the field.

## Claims

1. Device (1) for transporting eggs (12), comprising:
- a frame (2);
- at least one first receiving station (5) connected at a first height to the frame (2) for eggs (12) supplied via a feed channel;
- a dispensing station (6) for the eggs (12) connected at a second height to the (2) frame; and
- a conveyor (7, 11) carried by the frame (2) and extending along the at least one receiving station (5) and the dispensing station (6) for the purpose of transporting the eggs (12) from the at least one receiving station (5) to the dispensing station (6),
- wherein the first receiving station (5a) can be connected at different heights to the frame (2),
- wherein the conveyor (7, 11) is an endless conveyor which is provided with two endless chains (7) between which a number of egg holders (11) are arranged, and that the chains (7) are each guided along guide wheels (8) bearing-mounted in the frame (2) and in the stations (5, 6),
**characterized in**
- **that** the egg holders (11) are each connected on both sides to the chains (7) for pivoting about an axis extending in substantially horizontal direction above the centre of gravity of the egg holders (11),
- **that** the path of the conveyor (7, 11) connecting to each of the receiving stations (5) comprises a horizontal component,
- **that** the path of the conveyor leading (7,11) to each of the receiving stations (5) comprises a vertical component,
- **that** during the transition from the vertical to the horizontal movement, the eggs (12) are thereby displaced on the egg holders (11), and
- **that** the distance between the egg holders (11) is chosen such that a first egg holder (11) blocks an egg (12) carried to the receiving station (5) until an egg holder (11) following the first egg holder (11) has moved a predetermined distance toward the receiving station (5).

2. Device (1) as claimed in claim 1, **characterized in that** the device comprises at least a second receiving station (5b) which can be connected at different heights to the frame (2), that the conveyor (7, 11) extends along at least the second receiving station (5b) and the dispensing station (6) and that the conveyor (7, 11) is adapted to transport the eggs (12) from at least the first and the second receiving station (5a, 5b) to the dispensing station (6).

3. Device (1) as claimed in claim 1 or 2, **characterized in that** the chains (7) are each guided over a toothed wheel (10) which can be driven by an electric motor (9) for the purpose of driving the chains in a direction in which the path leading to a receiving station (5) is travelled in upward direction.

4. Device (1) as claimed in claim 1, 2 or 3, **characterized in that** the egg holders (11) each comprise two mutually connected supports (11a) which extend horizontally parallel to each other and which are adapted to support at least two eggs (12).

5. Device (1) as claimed in any of the preceding claims, **characterized in that** at the position of the at least one receiving station (5) a guide element (20) is placed which is adapted to rotate the egg holder (11) about its axis at the position of the receiving station by engaging on the egg holder (11).

6. Device (1) as claimed in any of the preceding claims, **characterized in that** the receiving station (5) is provided with a flexible carrier (14) extending over the width of the egg holders (11) and substantially horizontally into the path of eggs (12) placed on an egg holder (11) and passing through the receiving station (5), which carrier (14) is adapted to connect to the feed channel and the flexibility of which is such that it can carry eggs (12) but can allow passage of eggs placed on an egg holder (11) and passing through the receiving station.

7. Device (1) as claimed in any of the foregoing claims, **characterized in that** the dispensing station (6) can be connected at different heights to the frame (2).

8. Device (1) as claimed in claim 7, **characterized in that** at the position of the dispensing station (6) a guide element (15, 22) is placed which is adapted to tilt the egg holder (11) about its axis at the position of the dispensing station by engaging the egg holder.

9. Device (1) as claimed in claim 8, **characterized in that** the dispensing station (6) is provided with at least one urging element (15) which is adapted to protrude between the supports of the egg holders (11) when the egg holders have been tilted and to urge the eggs (12) carried on the egg holders (12) out of the tilted egg holders.

10. Device (1) as claimed in any of the preceding claims, **characterized in that** the guide elements each comprise at least one plate (20, 22) which is shaped in a contour and connected to the frame (2) and which is adapted to engage on a trailing part of the egg holders (11).

11. Method for installing a device (1) for transporting eggs (12) according to any of the preceding claims, comprising the following steps of:
- placing the frame (2);
- connecting the receiving station (5) to the frame (2) at a height such that a feed channel for feeding eggs (12) to the device (1) connects to the receiving station;
- connecting the dispensing station (6) to the frame (2) at a height such that the dispensing station connects to the discharge channel for discharging eggs (12) from the device (1); and
- placing the conveyor (7, 11) supported by the frame (2) and extending along the at least one receiving station (5) and the dispensing station (6) for the purpose of transporting the eggs (12) from the at least one receiving station to the dispensing station.

12. Method for transporting eggs (120) at least in the height by means of the device according to any of claims 1 to 10, comprising the steps of:
- feeding the eggs (12) at a first height to the endless conveyor (7, 11), comprising a number of egg holders (11) pivoting about an axis extending in substantially horizontal direction above the centre of gravity of the egg holders, at the first receiving station (5a); and
- transporting the eggs (12) via the endless conveyor (7,11) to the discharge member at the dispensing station (6) at a second height of the endless conveyor,
- wherein the direction of movement of the conveyor (7, 11) is changed from a movement with a vertical component to a movement with a horizontal movement in the receiving station (5a),
- wherein during the transition from the vertical to the horizontal movement, the eggs (12) are thereby displaced on the egg holders (11), and
- wherein a first egg holder (11) blocks an egg carried to the receiving station (5) until an egg holder (11) following the first egg holder has moved a predetermined distance toward the receiving station (5).

13. Method as claimed in claim 12, **characterized by** feeding eggs at a third height to the endless conveyor at a second receiving station (5b).

## Patentansprüche

1. Vorrichtung (1) zum Transportieren von Eiern (12), umfassend:
- einen Rahmen (2);
- wenigstens eine erste Annahmestation (5), die in einer ersten Höhe mit dem Rahmen (2)verbunden ist, für Eier (12) welche über einen Zufuhrkanal zugeführt werden;
- eine Ausgabestation (6) für Eier (12), die in einer zweiten Höhe mit dem Rahmen (2) verbunden ist; und
- ein Förderband (7, 11), das durch den Rahmen (2) getragen wird und der sich entlang der wenigstens einen Annahmestation (5) und der Ausgabestation (6) erstreckt, um die Eier (12) von der wenigstens einen Annahmestation (5) zur Ausgabestation (6) zu transportieren,
- wobei die erste Annahmestation (5a) in unterschiedlichen Höhen mit dem Rahmen (2) verbunden werden kann,
- wobei das Förderband (7, 11) ein Endlosförderband ist, das zwei Endlosketten (7) umfasst, zwischen welchen einige Eierhalter (11) angeordnet sind, und die Ketten (7) jeweils über Leiträdern (8) geleitet werden, die im Rahmen (2) und in den Stationen (5, 6) gelagert sind,
**dadurch gekennzeichnet,**
- **dass** die Eierhalter (11) jeweils an beiden Seiten mit den Ketten (7) schwenkbar um eine Achse verbunden sind, die sich in einer im Wesentlichen horizontalen Richtung über dem Schwerpunkt der Eierhalter (11) erstreckt,
- **dass** der Weg des Förderbands (7, 11), das mit jeder der Annahmestationen (5) verbunden ist, eine horizontale Komponente umfasst,
- **dass** der Weg des Förderbands (7, 11), das zu jedem der Annahmestationen (5) führt, eine vertikale Komponente umfasst,
- **dass** während dem Übergang von der vertikalen zur horizontalen Bewegung die Eier (12) dabei auf den Eierhaltern (11) verlagert werden, und
- **dass** die Distanz zwischen den Eierhaltern (11) derart ausgewählt ist, dass ein erster Eierhalter (11) ein Ei (12) blockiert, das zur Annahmestation (5) getragen wird, bis sich ein Eierhalter (11), der dem ersten Eierhalter (11) folgt, eine vorher bestimmte Distanz in Richtung der Annahmestation (5) bewegt hat.

2. Vorrichtung (1) nach Anspruch 1, **dadurch gekennzeichnet, dass** die Vorrichtung wenigstens eine zweite Annahmestation (5b) umfasst, die in unterschiedlichen Höhen mit dem Rahmen (2) verbunden werden kann, dass das Förderband (7, 11) sich entlang wenigstens der zweiten Annahmestation (5b) und der Ausgabestation (6) erstreckt und dass das Förderband (7, 11) angeordnet ist, die Eier (12) von wenigstens der ersten und der zweiten Annahmestation (5a, 5b) zur Ausgabestation (6) zu transportieren.

3. Vorrichtung (1) nach Anspruch 1 oder 2, **dadurch gekennzeichnet, dass** die Ketten (7) jeweils über ein Zahnrad (10) geleitet werden, welches durch einen Elektromotor (9) angetrieben werden kann, damit die Ketten in eine Richtung angetrieben werden, in welche der Weg, der zur Annahmestation (5) führt, in Aufwärtsrichtung geführt wird.

4. Vorrichtung (1) nach Anspruch 1, 2 oder 3, **dadurch gekennzeichnet, dass** die Eierhalter (11) jeweils zwei gegenseitig verbundene Träger (11a) umfassen, die sich horizontal parallel zueinander erstrecken und angepasst sind, wenigstens zwei Eier (12) zu tragen.

5. Vorrichtung (1) nach einem der vorangehenden Ansprüche, **dadurch gekennzeichnet, dass** bei der Position der wenigstens einen Annahmestation (5), ein Führungselement (20) angeordnet ist, das angepasst ist, um den Eierhalter (11) um seine Achse zu drehen, bei der Position der Annahmestation, indem er in den Eierhalter (11) eingreift.

6. Vorrichtung (1) nach einem der vorangehenden Ansprüche, **dadurch gekennzeichnet, dass** die Annahmestation (5) mit einem flexiblen Träger (14) zur Verfügung gestellt ist, der sich über die Breite der Eierhalter (11) und im Wesentlichen horizontal in den Weg der Eier (12) erstreckt, die auf einem Eierhalter (11) angeordnet sind und durch die Annahmestation (5) passieren, wobei der Träger (14) angepasst ist, um sich mit dem Zuführkanal zu verbinden und dessen Flexibilität derart ist, dass er Eier (12) tragen kann, jedoch den Durchgang von Eiern, die auf einem Eierhalter (11) angeordnet sind, erlaubt, und durch die Annahmestation passiert.

7. Vorrichtung (1) nach einem der vorangehenden Ansprüche, **dadurch gekennzeichnet, dass** die Ausgabestation (6) in unterschiedlichen Höhen mit dem Rahmen (2) verbunden werden kann.

8. Vorrichtung (1) nach Anspruch 7, **dadurch gekennzeichnet, dass** ein Führungselement (15, 22) an der Position der Ausgabestation (6) angeordnet ist, das geeignet ist, den Eierhalter (11) an der Position der Ausgabestation um seine Achse zu kippen, indem er in den Eierhalter eingreift.

9. Vorrichtung (1) nach Anspruch 8, **dadurch gekennzeichnet, dass** die Ausgabestation (6) mit wenigstens einem Treibelement (15) versehen ist, welches angepasst ist, zwischen den Trägern der Eierhalter (11) hindurchzuragen, wenn die Eierhalter gekippt wurden, und um die Eier (12), die auf den Eierhaltern (11) getragen werden, aus den gekippten Eierhaltern herauszudrängen.

10. Vorrichtung (1) nach einem der vorangehenden Ansprüche, **dadurch gekennzeichnet, dass** die Führungselemente jeweils wenigstens eine Platte (20, 22) umfassen, welche die Form einer Kontur aufweist und mit dem Rahmen (2) verbunden ist, und die derart angepasst ist, dass sie mit einem hinteren Teil der Eierhalter (11) in Eingriff kommt.

11. Verfahren zur Installierung einer Vorrichtung (1) zum Transportieren von Eiern (12) nach einem der vorangehenden Ansprüche, umfassend die folgenden Schritte:
- Anordnen des Rahmens (2);
- Verbinden der Annahmestation (5) mit dem Rahmen (2) in einer Höhe, derart, dass sich ein Zuführkanal zum Zuführen von Eiern (12) in die Vorrichtung (1) mit der Annahmestation verbindet;
- Verbinden der Ausgabestation (6) mit dem Rahmen (2) in einer Höhe, derart, dass die Ausgabestation sich mit dem Ausgabekanal zur Ausgabe von Eiern (12) aus der Vorrichtung (1) verbindet; und
- Anordnen des Förderbandes (7, 11), das durch den Rahmen (2) unterstützt wird und sich entlang der wenigstens einen Annahmestation (5) und der Ausgabestation (6) erstreckt, zum Zwecke des Transports der Eier (12) von der wenigstens einen Annahmestation in die Ausgabestation.

12. Verfahren zum Transportieren von Eiern (120) wenigstens in der Höhe mittels der Vorrichtung nach einem der Ansprüche 1 bis 10, umfassend die folgenden Schritte:
- Zuführen der Eier (12) in einer ersten Höhe zum Endlosförderband (7, 11), umfassend eine Anzahl um eine Achse schwenkende Eierhaltern (11), welche Achse sich im Wesentlichen in horizontaler Richtung über dem Schwerpunkt der Eierhalter erstreckt, bei der ersten Annahmestation (5a); und
- Transportieren der Eier (12) über das Endlosförderband (7, 11) zum Ausgabeelement an der Ausgabestation (6) in einer zweiten Höhe des Endlosförderbandes,
- wobei die Bewegungsrichtung des Förderbandes (7, 11) von einer Bewegung mit einer vertikalen Komponente zu einer Bewegung mit einer horizontalen Komponente in die Annahmestation (5a) geändert wird,
- wobei während des Übergangs von der vertikalen zur horizontalen Bewegung die Eier (12) dabei auf den Eierhaltern (11) verlagert werden, und
- wobei ein erster Eierhalter (11) ein Ei blockiert, das zur Annahmestation (5) getragen wird, bis ein Eierhalter (11), der dem ersten Eierhalter folgt, sich in einer vorher bestimmten Distanz in Richtung der Annahmestation (5) bewegt.

13. Verfahren nach Anspruch 12, **dadurch gekennzeichnet, dass** Eier in einer dritten Höhe dem Endlosförderband an einer zweiten Annahmestation (5b) zugeführt werden.

## Revendications

1. Dispositif (1) pour transporter des oeufs (12), comprenant :
- un cadre (2) ;
- au moins un premier poste de réception (5) connecté au cadre (2) à une première hauteur pour les oeufs (12) apportés par le biais d'un canal d'alimentation ;
- un poste de distribution (6) pour les oeufs (12) connecté au cadre (2) à une deuxième hauteur ; et
- un convoyeur (7, 11) porté par le cadre (2) et s'étendant le long de l'au moins un poste de réception (5) et du poste de distribution (6) afin de transporter les oeufs (12) à partir de l'au moins un poste de réception (5) jusqu'au poste de distribution (6),
- le premier poste de réception (5a) pouvant être connecté au cadre (2) à différentes hauteurs,
- le convoyeur (7, 11) étant un convoyeur sans fin qui est pourvu de deux chaînes sans fin (7) entre lesquelles sont agencés un certain nombre de porte-oeufs (11), et les chaînes (7) étant chacune guidées le long de roues de guidage (8) montées sur palier dans le cadre (2) et dans les postes (5, 6), **caractérisé**
- **en ce que** les porte-oeufs (11) sont chacun connectés des deux côtés aux chaînes (7) pour pivoter autour d'un axe s'étendant dans une direction sensiblement horizontale au-dessus du centre de gravité des porte-oeufs (11),
- **en ce que** la trajectoire du convoyeur (7, 11) se connectant à chacun des postes de réception (5) comprend une composante horizontale,
- **en ce que** la trajectoire du convoyeur (7, 11) menant jusqu'à chacun des postes de réception (5) comprend une composante verticale,
- **en ce que**, pendant la transition du déplacement vertical au déplacement horizontal, les oeufs (12) sont ainsi déplacés sur les porte-oeufs (11), et
- **en ce que** la distance entre les porte-oeufs (11) est choisie de telle sorte qu'un premier porte-oeufs (11) bloque un oeuf (12) porté jusqu'au poste de réception (5) jusqu'à ce qu'un porte-oeufs (11) suivant le premier porte-oeufs (11) se soit déplacé d'une distance prédéterminée en direction du poste de réception (5).

2. Dispositif (1) selon la revendication 1, **caractérisé en ce que** le dispositif comprend au moins un deuxième poste de réception (5b) qui peut être connecté au cadre (2) à différentes hauteurs, **en ce que** le convoyeur (7, 11) s'étend le long d'au moins le deuxième poste de réception (5b) et du poste de distribution (6), et **en ce que** le convoyeur (7, 11) est conçu pour transporter les oeufs (11) à partir d'au moins les premier et deuxième postes de réception (5a, 5b) jusqu'au poste de distribution (6).

3. Dispositif (1) selon la revendication 1 ou 2, **caractérisé en ce que** les chaînes (7) sont chacune guidées sur une roue dentée (11) qui peut être entraînée par un moteur électrique (9) afin d'entraîner les chaînes dans un sens dans lequel la trajectoire menant jusqu'à un poste de réception (5) est parcourue dans un sens vers le haut.

4. Dispositif (1) selon la revendication 1, 2 ou 3, **caractérisé en ce que** les porte-oeufs (11) comprennent chacun deux supports (11a) mutuellement connectés qui s'étendent horizontalement parallèlement l'un à l'autre et qui sont conçus pour supporter au moins deux oeufs (12).

5. Dispositif (1) selon l'une quelconque des revendications précédentes, **caractérisé en ce qu'**un élément de guidage (20) est placé à la position de l'au moins un poste de réception (5), lequel élément de guidage est conçu pour faire tourner le porte-oeufs (11) autour de son axe à la position du poste de réception en s'engageant avec le porte-oeufs (11).

6. Dispositif (1) selon l'une quelconque des revendications précédentes, **caractérisé en ce que** le poste de réception (5) est pourvu d'un support flexible (14) s'étendant sur la largeur des porte-oeufs (11) et sensiblement horizontalement dans la trajectoire des oeufs (12) placés sur un porte-oeufs (11) et traversant le poste de réception (5), lequel support (14) est conçu pour se connecter au canal d'alimentation et sa flexibilité est telle qu'il puisse porter des oeufs (12) mais puisse permettre le passage d'oeufs placés sur un porte-oeufs (11) et traversant le poste de réception.

7. Dispositif (1) selon l'une quelconque des revendications précédentes, **caractérisé en ce que** le poste de distribution (6) peut être connecté au cadre (2) à différentes hauteurs.

8. Dispositif (1) selon la revendication 7, **caractérisé en ce qu'**un élément de guidage (15, 22) est placé à la position du poste de distribution (6), lequel élément de guidage est conçu pour faire basculer le porte-oeufs autour de son axe à la position du poste de distribution en s'engageant avec le porte-oeufs.

9. Dispositif (1) selon la revendication 8, **caractérisé en ce que** le poste de distribution (6) est pourvu d'au moins un élément de poussée (15) qui est conçu pour faire saillie entre les supports des porte-oeufs (11) lorsque les porte-oeufs ont été basculés et pour pousser les oeufs (12) portés sur les porte-oeufs (11) hors des porte-oeufs basculés.

10. Dispositif (1) selon l'une quelconque des revendications précédentes, **caractérisé en ce que** les éléments de guidage comprennent chacun au moins une plaque (20, 22) qui est façonnée dans un contour et connectée au cadre (2) et qui est conçue pour s'engager sur une partie arrière des porte-oeufs (11).

11. Procédé d'installation d'un dispositif (1) pour transporter des oeufs (12) selon l'une quelconque des revendications précédentes, comprenant les étapes suivantes :
- placement du cadre (2) ;
- connexion du poste de réception (5) au cadre (2) à une hauteur telle qu'un canal d'alimentation pour alimenter le dispositif (1) en oeufs (12) se connecte au poste de réception ;
- connexion du poste de distribution (6) au cadre (2) à une hauteur telle que le poste de distribution se connecte au canal d'évacuation pour évacuer des oeufs (12) du dispositif (1) ; et
- placement du convoyeur (7, 11) supporté par le cadre (2) et s'étendant le long de l'au moins un poste de réception (5) et du poste de distribution (6) afin de transporter les oeufs (12) à partir de l'au moins un poste de réception jusqu'au poste de distribution.

12. Procédé de transport d'oeufs (120) au moins en hauteur au moyen du dispositif selon l'une quelconque des revendications 1 à 10, comprenant les étapes suivantes :
- alimentation en oeufs (12), à une première hauteur, du convoyeur sans fin (7, 11), comprenant un certain nombre de porte-oeufs (11) pivotant autour d'un axe s'étendant dans une direction sensiblement horizontale au-dessus du centre de gravité des porte-oeufs, au niveau du premier poste de réception (5a) ; et
- transport des oeufs (12) par le biais du convoyeur sans fin (7, 11) jusqu'à l'organe d'évacuation au niveau du poste de distribution (6) à une deuxième hauteur du convoyeur sans fin,
- la direction de déplacement du convoyeur (7, 11) étant modifiée d'un déplacement présentant une composante verticale à un déplacement présentant une composante horizontale dans le poste de réception (5a),
- les oeufs (12) étant ainsi déplacés sur les porte-oeufs (11) pendant la transition du déplacement vertical au déplacement horizontal, et
- un premier porte-oeufs (11) bloquant un oeuf porté jusqu'au poste de réception (5) jusqu'à ce qu'un porte-oeuf (11) suivant le premier porte-oeuf se soit déplacé d'une distance prédéterminée en direction du poste de réception (5).

13. Procédé selon la revendication 12, **caractérisé par** l'alimentation en oeufs, à une troisième hauteur, du convoyeur sans fin au niveau d'un deuxième poste de réception (5b).
